# EUROPÄISCHE PATENTSCHRIFT

(11) **EP 1 849 656 B1**
(45) Veröffentlichungstag und Bekanntmachung des Hinweises auf die Patenterteilung: **09.04.2014**
(21) Anmeldenummer: 07002975.6
(22) Anmeldetag: 13.02.2007
(51) Int. Cl.: B60R 13/08

(54) **Abschirmeinrichtung**
Screening device
Dispositif de blindage

(30) Priorität: 28.04.2006 DE 102006019928
(43) Veröffentlichungstag der Anmeldung: 31.10.2007
(73) Patentinhaber: ElringKlinger AG, 72581 Dettingen (DE)
(72) Erfinder: Sturm, Rainer, 90518 Altorf (DE)
(74) Vertreter: nospat Patent- und Rechtsanwälte GbR

(56) Entgegenhaltungen:
- EP-A1- 0 692 324
- EP-A1- 0 881 423
- WO-A-99/46147
- DE-A1- 3 834 054
- US-A- 5 550 338

## Beschreibung

Die Erfindung bezieht sich auf eine Abschirmeinrichtung mit einem eine Schirmfläche, insbesondere ein Hitzeschild, bildenden Abschirmteil und einem Klemmteil.

Abschirmteile, die mittels eines zugehörigen Klemmteiles an einem als Träger dienenden Anbringteil festlegbar sind, sind bekannt. Insbesondere in der Kraftfahrzeugtechnik finden derartige Abschirmeinrichtungen weit verbreitete Anwendung als Hitzeschilder, um wärmeempfindliche Bauelemente wie Sensoren, Kraftstoffleitungen, Druckdosen, kritische Verschraubungen an empfindlichen Gehäuseteilen etc. zu schützen. Während zwar die Wärmeentwicklung beispielsweise eines sparsamen leistungsoptimierten Dieselmotors am Zylinder- oder Kurbelwellengehäuse sehr gering sein kann, gilt das für "heiße Zonen", wie bei Krümmer, Turbolader, Katalysator etc. keineswegs, so dass schützende Abschirmflächen an entsprechenden Stellen vorhanden sein müssen. Dies gilt insbesondere im Nahbereich von Katalysatoren, die wegen ihrer phasenweisen hohen Oberflächentemperatur starke Hitzequellen darstellen.

Im Betrieb sind die in den "heißen Zonen" erforderlichen Abschirmeinrichtungen nicht nur thermischen Belastungen ausgesetzt, sondern es kommen auch mechanische Belastungen, insbesondere durch Vibrationen, hinzu, die über Trägerteile auf das betreffende Abschirmteil übertragen werden. Angesichts dieser Belastungen sind an die Verbindungsvorrichtungen, die derartige Abschirmeinrichtungen an den zugehörigen Anbringteilen in Stellung halten, besondere Anforderungen zu stellen. Die üblichen Verbindungsvorrichtungen des Standes der Technik sehen Federklammern mit einer gewissen Vorspannung (Clipse) vor, welche über Stehbolzen oder dergleichen, aber auch über ganze Baukomponenten, beispielsweise Magnetschalter von Lichtmaschinen oder Abgaskrümmer, geklemmt werden. Die Klemmkraft oder Haltekraft resultiert hierbei aus der Wahl des Federmaterials und der konstruktiven Auslegung der betreffenden Federn. Wie sich gezeigt hat, besteht jedoch, insbesondere wenn es sich bei dem betreffenden Anbringteil um ein heißes Bauteil handelt, die Gefahr, dass Ermüdungserscheinungen im Federmaterial eintreten, was verstärkt der Fall ist, wenn betriebsbedingte Vibrationen hinzu kommen. Eine sichere Festlegung der betreffenden Abschirmteile mittels bekannter Verbindungsvorrichtungen ist daher nicht gewährleistet.

Aus der WO99/46147A1 ist eine Abschirmeinrichtung mit den Merkmalen des Oberbegriffs des Anspruchs 1 bekannt.

Im Hinblick hierauf stellt sich die Erfindung die Aufgabe, eine Abschirmeinrichtung zur Verfügung zu stellen, deren Bauweise eine besonders sichere Festlegung des Abschirmteiles auch bei hohen thermischen und mechanischen Dauerbelastungen auf einfache und sichere Weise gewährleistet.

Gemäß der Erfindung ist diese Aufgabe durch eine Abschirmeinrichtung gelöst, die die Merkmale des Patentanspruches 1 in seiner Gesamtheit aufweist.

Danach besteht die Besonderheit der Erfindung darin, dass ein Klemmteil, welches die Verbindungsvorrichtung zur Festlegung des Abschirmteiles an einem Anbringteil bildet, mit dem Abschirmteil einstückig durch einen Fortsatz desselben gebildet ist. Dieser Fortsatz hat eine solche Form, dass, wenn er an einer Biegestelle auf sich umgelegt gefaltet ist, zwei Klemmschenkel gebildet sind, die mit einander zugewandten Klemmflächen zwischen sich einen Klemmspalt mit einem an der Biegestelle geschlossenen Ende begrenzen. Das Klemmteil bildet somit einen integralen Bestandteil des Abschirmteiles, so dass eine Verbindungsvorrichtung besonders hoher Strukturfestigkeit gebildet ist. Eine betriebssichere Anbringung der Abschirmeinrichtung ist daher auch bei hohen thermischen und mechanischen Belastungen gewährleistet. Den Klemmschenkeln ist eine Spanneinrichtung zugeordnet, mittels deren die Klemmflächen an ein im Klemmspalt befindliches Anbringteil anpressbar sind. Dadurch bleibt über lange Betriebszeiträume eine gewünschte hohe Anpresskraft aufrecht erhalten, da die Gefahr eines Nachlassens der Anpresskraft aufgrund von Materialermüdung, wie sie durch nachlassende Federkraft bei den üblichen Clipsen gegeben ist, vermieden ist. Das Klemmteil ist derart dimensioniert, dass die Länge der Klemmschenkel, gemessen von der Biegestelle bis zu ihrem von dieser entfernten, freien Ende näherungsweise der in dieser Richtung gemessenen Haupterstreckung des Abschirmteiles entspricht. Dadurch stehen groß dimensionierte Klemmflächen für die Zusammenwirkung mit entsprechend groß dimensionierten Anbringteilen zur Verfügung.

Als Spanneinrichtung kann in besonders vorteilhafter Weise zumindest eine an der Außenseite eines Klemmschenkels befindliche Schraubenmutter und dazu fluchtende Schraubenlöcher für eine Spannschraube in den Klemmschenkeln vorgesehen sein, wobei sich bei einfacher und kompakter Bauweise der Spanneinrichtung eine hohe Klemmkraft erreichen lässt.

Bei vorteilhaften Ausführungsbeispielen kann die Anordnung so getroffen sein, dass die Schirmfläche einen Haupt-Flächenteil und einen zu diesem abgebogen oder gewölbt verlaufenden Neben-Flächenteil aufweist, wobei sich der die Klemmschenkel bildende Fortsatz an den Neben-Flächenteil anschließt. Bei solcher Gestaltung steht neben einer hauptsächlichen Abschirmzone zwischen dieser und dem Klemmteil eine weitere Abschirmzone zur Verfügung, die in Anpassung an die Gegebenheiten einen von der ersten Abschirmzone abweichenden Verlauf haben kann und das Klemmteil in gewünschter Weise vom Abschirmteil räumlich distanziert.

Hierbei kann die Anordnung so getroffen sein, dass der Haupt-Flächenteil einen im großen rechteckförmigen Umriss besitzt und sich der Neben-Flächenteil an eine Langseite des Haupt-Flächenteiles anschließt.

Was die Breite des Neben-Flächenteiles anbelangt, kann dieser praktisch eine Fortsetzung der kürzeren Seitenränder des Haupt-Flächenteiles bilden; oder die in Richtung der Länge der Klemmschenkel gemessene Breite des Neben-Flächenteiles kann geringer sein als die Länge der Klemmschenkel, die sich in diesem Falle beidseits über die Seitenränder des Neben-Flächenteiles hinaus erstrecken können. Bei dieser Gestaltung kann die Breite des Haupt-Flächenteiles im Hinblick auf die thermische Abschirmwirkung ausreichend breitflächig gewählt werden, während der Neben-Flächenteil entsprechend den mechanischen Anforderungen mit für die Strukturfestigkeit ausreichender, jedoch weniger breiter Gestalt geformt sein kann.

Eine besonders hohe Strukturfestigkeit der gesamten Abschirmeinrichtung ergibt sich, wenn zumindest eine sich über das Abschirmteil und das Klemmteil durchgehend erstreckende Verstärkungssicke ausgebildet ist.

In besonders vorteilhafter Weise kann die Anordnung hierbei so getroffen sein, dass zwei im Abstand voneinander befindliche, zur Schirmfläche des Abschirmteiles symmetrisch gelegene Verstärkungssicken bis zum entfernt gelegenen Ende des Klemmteiles hin senkrecht zur Längsrichtung der Klemmschenkel und zueinander parallel verlaufend vorgesehen sind.

Nachstehend ist die Erfindung anhand von in der Zeichnung dargestellten Ausführungsbeispielen im Einzelnen erläutert. Es zeigen:
- Fig. 1 eine perspektivische Schrägansicht, gesehen auf die Oberseite eines Ausführungsbeispieles der erfindungsgemäßen Abschirmeinrichtung, wobei Teile der zugehörigen Spanneinrichtung weggelassen sind;
- Fig. 2 eine perspektivische Schrägansicht des Ausführungsbeispieles von Fig. 1, gesehen auf die Unterseite;
- Fig. 3 eine gegenüber Fig. 1 und 2 in kleinerem Maßstab und abgebrochen gezeichnete perspektivische Schrägansicht, in der das Ausführungsbeispiel in eingebautem, d. h. an einem Anbringteil festgelegten Zustand gezeigt ist;
- Fig. 4 eine der Fig. 1 ähnliche perspektivische Schrägansicht eines zweiten Ausführungsbeispieles des Abschirmteiles und
- Fig. 5 eine der Fig. 3 ähnliche Darstellung, die das Ausführungsbeispiel von Fig. 4 in eingebautem Zustand zeigt.

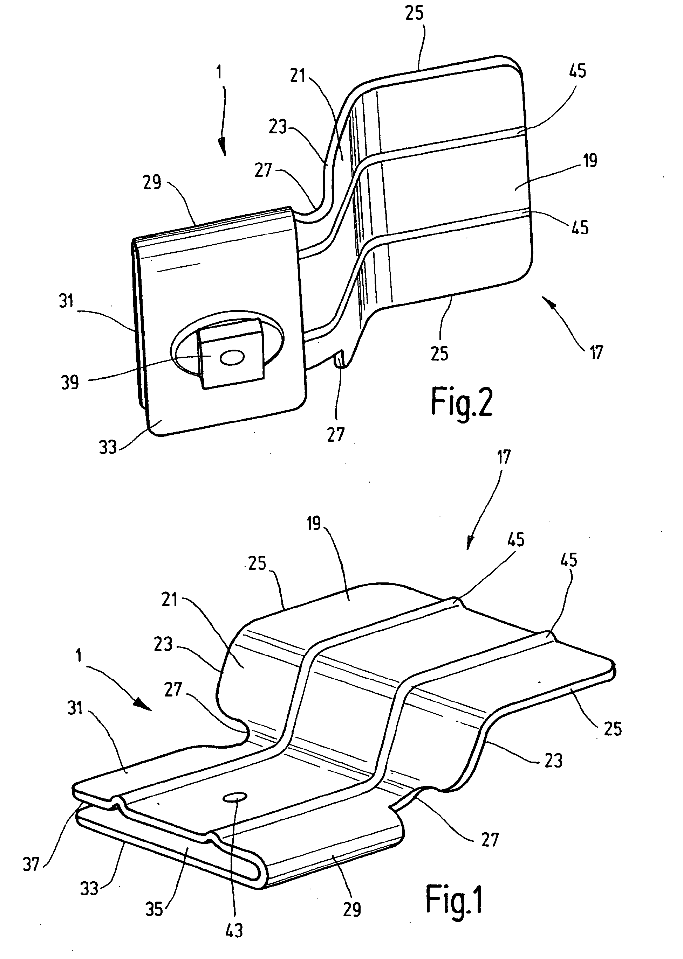

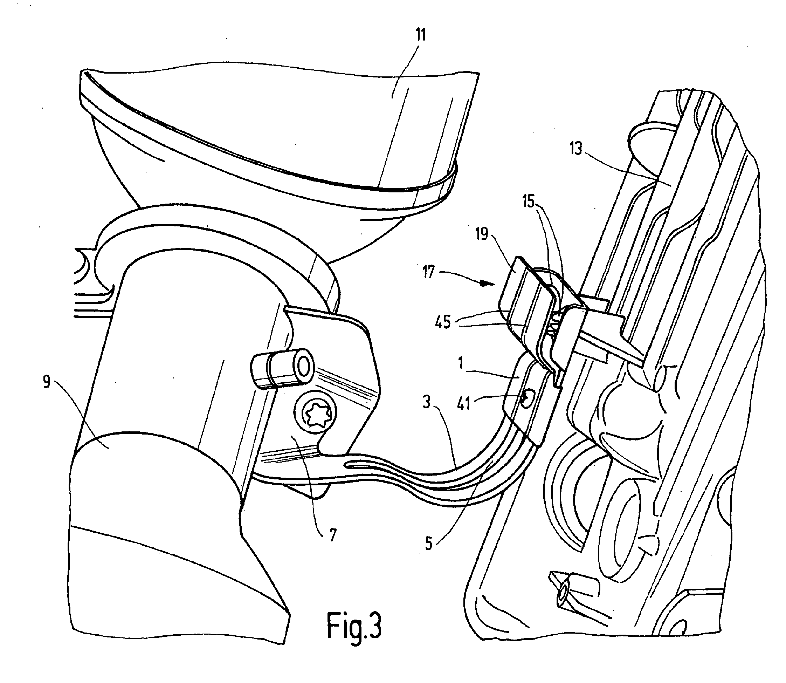

Fig. 3 zeigt das in Fig. 1 und 2 gesondert dargestellte Ausführungsbeispiel in eingebautem Zustand, wobei die Abschirmeinrichtung mit ihrem Klemmteil 1 an einem als Träger dienenden Anbringteil 3 festgelegt ist. Bei letzterem handelt es sich um ein Blechteil mit einem dem Klemmteil 1 zugeordneten geschwungenen Endabschnitt, in dem sich ein mittiger Längsschlitz 5 befindet. Der nicht geschlitzte andere Endabschnitt des Anbringteiles 3 bildet eine Befestigungsplatte 7, die mit einem Abgaskrümmer 9 eines Verbrennungsmotors verschraubt ist. Der Abgaskrümmer 9 führt zu einem Katalysator 11. Im Betrieb bilden Abgaskrümmer 9 und Katalysator 11 eine "heiße Zone", so dass es erforderlich ist, wärmeempfindliche Regionen eines benachbarten Gehäuseteiles 13 thermisch abzuschirmen. Bei dem in Fig. 3 gezeigten Beispiel handelt es sich um hitzeempfindliche Schrauben 15 am Gehäuseteil 13, die durch das sich über die Schrauben 15 erstreckende Abschirmteil 17, das eine als Hitzeschild dienende Schirmfläche bildet, abgeschirmt sind.

Fig. 1 und 2 zeigen die Abschirmeinrichtung im Einzelnen. Wie erkennbar ist, handelt es sich um ein einteiliges Bauteil, wobei Klemmteil 1 und Abschirmteil 17 einstückig aus einem Metallblech, beispielsweise Edelstahl, geformt sind. Das Blechteil ist so zugeschnitten und geformt, dass der Abschirmteil 17 eine Haupt-Schirmfläche 1.9 und eine sich anschließende, stumfpwinklig abgebogene Neben-Schirmfläche 21 bildet. An letztere schließt sich wiederum das Klemmteil 1 an. Wie insbesondere Fig. 1 und 3 zeigen, besitzt die Haupt-Schirmfläche 19 einen im großen Ganzen rechteckförmigen Umriss (abgesehen von abgerundeten Eckbereichen), und der Neben-Flächenteil 21 schließt sich an eine Langseite des Haupt-Flächenteiles 19 an. Wie insbesondere aus Fig. 1 deutlich entnehmbar ist, bilden die Seitenränder 23 des Neben-Flächenteiles 21 eine unmittelbare Fortsetzung der kürzeren Seitenränder 25 des Haupt-Flächenteiles 19. Das Klemmteil 1 wiederum, das einen einstückigen Fortsatz des Abschirmteiles 17 bildet, schließt sich an das vom Haupt-Flächenteil 19 entfernte Ende des Neben-Flächenteiles 21 an, wobei am Übergang zwischen Neben-Flächenteil 21 und Klemmteil 1 an beiden Außenseiten des Übergangsbereiches dessen Breite durch Einschnürungen 27 verringert ist.

Das sich an die Einschnürungen 27 anschließende Klemmteil 1 erstreckt sich in einer zur Ebene des Haupt-Flächenteiles 19 im wesentlichen parallelen Ebene. Die das Klemmteil 1 bildende Blechpartie ist so zugeschnitten, dass sie an einer Biegestelle 29, die sich im wesentlichen parallel zum benachbarten Seitenrand 25 des Haupt-Flächenteiles 19 erstreckt, umgebogen und so über sich umgelegt und gefaltet werden kann, dass das Klemmteil 1 zwei nebeneinander liegende Klemmschenkel 31 und 33 bildet; deren einander zugewandte Klemmflächen einen Klemmspalt 35 definieren, der an der Biegestelle 29 geschlossen und am dazu entgegengesetzten Ende 37 offen ist, so dass ein Trägerteil, beispielsweise das Anbringteil 3 von Fig. 3, vom offenen Ende 37 her in den Klemmspalt 35 eingeschoben werden kann.

Wie aus Fig. 1 und 2 ebenfalls deutlich entnehmbar ist, entspricht die Länge des Klemmspaltes 35, gemessen von der Biegestelle 29 bis zum offenen Ende 37, im wesentlichen der in gleicher Richtung gemessenen Länge des Abschirmteiles 17, und zwar sowohl der Länge von dessen Haupt-Flächenteil 19 als auch von dessen Neben-Flächenteil 21. Die quer zu dieser Längsrichtung gemessene Breite des Klemmteiles 1 entspricht in etwa der in dieser Richtung gemessenen Abmessung des Haupt-Flächenteiles 19, also im wesentlichen der Länge von dessen Seitenrändern 25. Somit ergeben sich für den Klemmspalt 35 entsprechend groß dimensionierte Klemmflächen zur Anlage am Anbringteil 3. Wie Fig. 2 zeigt, befindet sich an der Außenseite des Klemmschenkels 33 eine Schraubenmutter 39, um zusammen mit dazu fluchtenden Schraubenlöchern 43 (Fig. 1) in den Klemmschenkeln 31 und 33 und einer Spannschraube 41 (Fig. 3) eine Spanneinrichtung zum Verspannen des Klemmteiles 1 am Anbringteil 3 zu bilden. Bei dem in Fig. 1 bis 3 gezeigten Beispiel, wobei sich im Anbringteil 3 ein Längsschlitz 5 befindet, ist die Spanneinrichtung im Klemmteil 1 im wesentlichen zentral gelegen angeordnet.

Um die Strukturfestigkeit der Abschirmeinrichtung zu erhöhen, ist das Blechteil mit Verstärkungssicken 45 versehen. Diese erstrecken sich in senkrecht zur Länge des Klemmspaltes 35 verlaufender Richtung im Abstand voneinander und zueinander parallel verlaufend sowohl über das Abschirmteil 17 als auch über den angrenzenden Klemmschenkel 31 des Klemmteiles 1, durchgehend bis zu dessen freiem Endrand. Wie insbesondere Fig. 1 zeigt, erstrecken sich die Verstärkungssicken 45 in symmetrischer Anordnung zu Haupt-Flächenteil 19 und Neben-Flächenteil 21 und beidseits neben den Schraubenlöchern 43 des Klemmteiles 1.

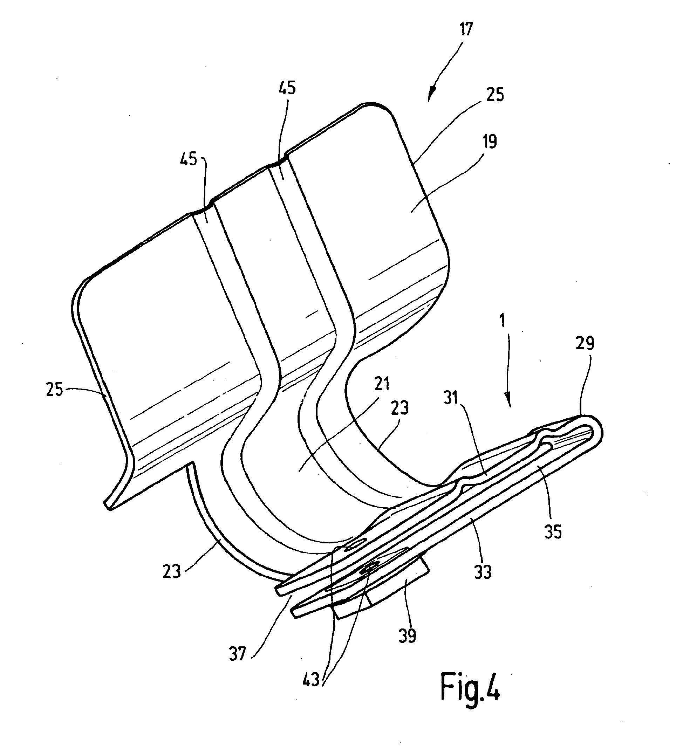

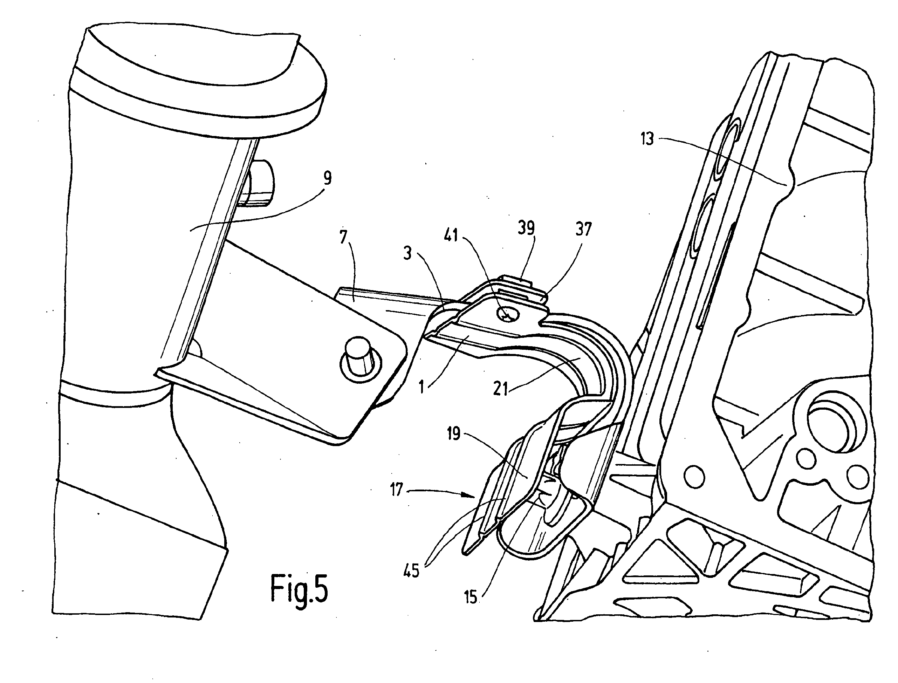

Das in Fig. 4 und 5 gezeigte zweite Ausführungsbeispiel unterscheidet sich vom erstbeschriebenen Beispiel im wesentlichen in zweierlei Hinsicht. Zum einen bezieht sich dies auf die Lage der aus Mutter 39, Spannschraube 41 (Fig. 5) und Schraubenlöchern 43 gebildeten Spanneinrichtung, Im Unterschied zu Fig. 1 bis 3 befindet sich die Spanneinrichtung nicht im Zentralbereich des Klemmteiles 1, sondern eng benachbart zum offenen Ende 37 des Klemmspaltes 35. Diese Lageanordnung der Spanneinrichtung ist zur Festlegung der Abschirmeinrichtung an einem Anbringteil vorgesehen, das keinen Längsschlitz oder eine andere entsprechende Öffnung für den Durchtritt einer Spannschraube 41 aufweist. Im übrigen entspricht das Klemmteil 1 hinsichtlich seiner Gestaltung dem Klemmteil des zuvor beschriebenen Beispieles.

Das Abschirmteil 17 des Beispieles von Fig. 4 und 5 ist, ebenso wie dies beim zuvor beschriebenen Beispiel der Fall ist, in einen Haupt-Flächenteil 19 und einen Neben-Flächenteil 21 unterteilt. Der zweite wesentliche Unterschied des zweiten Ausführungsbeispiels besteht darin, dass der Neben-Flächenteil 21 eine wesentlich geringere Breite, gemessen in Richtung des Klemmspaltes 35, aufweist als das Klemmteil 1 oder der Haupt-Flächenteil 19, gemessen in gleicher Richtung. Außerdem bildet der Neben-Flächenteil 21 ein gegenüber dem Haupt-Flächenteil 19 gewölbtes, verhältnismäßig langes, geschwungenes Bauteil. Dessen Formgebung und Abmessung sind so gewählt, dass es zusätzlich zu der durch den Haupt-Flächenteil 19 gebildeten ersten Abschirmzone eine zweite Abschirmzone gewünschter Lage und Ausdehnung bildet und/oder einen gegebenenfalls größeren Abstand zwischen Abschirmteil 17 und Anbringteil 3 überbrückt. In übriger Hinsicht, d. h. was die Gestaltung des Klemmteiles 1 und des Haupt-Flächenteiles 19 des Abschirmteiles 17 entspricht, einschließlich der Lageanordnung von Verstärkungssicken 45, entspricht das zweite Ausführungsbeispiel dem zuvor beschriebenen Beispiel.

## Patentansprüche

1. Abschirmeinrichtung mit einem eine Schirmfläche, insbesondere ein Hitzeschild, bildenden Abschirmteil (17) und einem Klemmteil (1), das mit dem Abschirmteil (17) einstückig durch einen Fortsatz desselben gebildet ist, der an einer Biegestelle (29) auf sich umgelegt und derart gefaltet ist, dass zwei benachbart nebeneinander liegende Klemmschenkel (31, 33) gebildet sind, deren einander zugewandte Klemmflächen zwischen sich einen Klemmspalt (35) mit einem an der Biegestelle (29) geschlossenen Ende begrenzen, wobei den Klemmschenkeln (31, 33) eine Spanneinrichtung (39, 41, 43) zugeordnet ist, mittels der die Klemmflächen an ein im Klemmspalt (35) befindliches Anbringteil (3) anpressbar sind, **dadurch gekennzeichnet,**
**dass** die Länge der Klemmschenkel (31, 33), gemessen von der Biegestelle (29) bis zu ihrem von dieser entfernten, freien Ende (37) näherungsweise der in dieser Richtung gemessenen Haupterstreckung des Abschirmteiles (17) entspricht.

2. Abschirmeinrichtung nach Anspruch 1, **dadurch gekennzeichnet, dass** die Spanneinrichtung zumindest eine an der Außenseite eines Klemmschenkels (33) befindliche Schraubenmutter (39) und dazu fluchtende Schraubenlöcher (43) für eine Spannschraube (41) in den Klemmschenkeln (31, 33) aufweist.

3. Abschirmeinrichtung nach Anspruch 2, **dadurch gekennzeichnet, dass** etwa auf halber Länge der Klemmschenkel (31, 33) eine Schraubenmutter (39) und zugehörige Schraubenlöcher (43) gelegen sind.

4. Abschirmeinrichtung nach Anspruch 2, **dadurch gekennzeichnet, dass** eine Schraubenmutter (39) und zugeordnete Schraubenlöcher (43) in der Nähe der freien Enden der Klemmschenkel (31, 33) gelegen sind.

5. Abschirmeinrichtung nach einem der Ansprüche 1 bis 4, **dadurch gekennzeichnet, dass** die Schirmfläche einen Haupt-Flächenteil (19) und einen zu diesem abgebogen oder gewölbt verlaufenden Neben-Flächenteil (21) aufweist und dass sich der die Klemmschenkel (31, 33) bildende Fortsatz an den Neben-Flächenteil (21) anschließt.

6. Abschirmeinrichtung nach Anspruch 5, **dadurch gekennzeichnet, dass** der Haupt-Flächenteil (19) einen im großen Ganzen rechteckförmigen Umriss besitzt und dass sich der Neben-Flächenteil (21) an eine Langseite des Haupt-Flächenteiles (19) anschließt.

7. Abschirmeinrichtung nach Anspruch 6, **dadurch gekennzeichnet, dass** sich die Seitenränder (23) des Neben-Flächenteiles (21) näherungsweise parallel zueinander und senkrecht zur Längsrichtung der Klemmschenkel (31, 33) erstrecken.

8. Abschirmeinrichtung nach Anspruch 7, **dadurch gekennzeichnet, dass** die in Richtung der Länge der Klemmschenkel (31, 33) gemessene Breite des Neben-Flächenteiles (21) geringer ist als die Länge der Klemmschenkel (31, 33), die sich beidseits über die Seitenränder (23) des Neben-Flächenteiles (21) hinaus erstrecken.

9. Abschirmeinrichtung nach einem der Ansprüche 1 bis 8, **dadurch gekennzeichnet, dass** zumindest eine sich über das Abschirmteil (17) und das Klemmteil (1) durchgehend erstreckende Verstärkungssicke (45) vorhanden ist.

10. Abschirmeinrichtung nach Anspruch 9, **dadurch gekennzeichnet, dass** zwei im Abstand voneinander befindliche, zur Schirmfläche des Abschirmteiles (17) symmetrisch gelegene Verstärkungssicken (45) bis zum entfernt gelegenen Ende des Klemmteiles (1) hin senkrecht zur Längsrichtung der Klemmschenkel (31, 33) und zueinander parallel verlaufend vorgesehen sind.

11. Abschirmeinrichtung nach einem der Ansprüche 6 bis 10, **dadurch gekennzeichnet, dass** die senkrecht zur Länge der Klemmschenkel (31, 33) gemessene Breite derselben zumindest halb so groß ist wie die Länge der kürzeren Seiten (25) des Haupt-Flächenteiles (19) der Abschirmfläche (17).

## Claims

1. A shielding device with a shielding part (17) constituting a shielding surface, in particular a heat shield, and with a clamping part (1) that is embodied of one piece with the shielding part (17) through an extension thereof, which is laid over onto itself at a bending point (29) and is folded so as to produce two adjacent clamping legs (31, 33) whose clamping surfaces oriented toward each other define a clamping gap (35) between themselves, with a closed end at the bending point (29), the clamping legs (31, 33) being associated with a clamping device (39, 41, 43) by means of which the clamping surfaces can be pressed against a mounting piece (3) situated in the clamping gap (35), **characterized in that**
the length of the clamping legs (31, 33) measured from the bending point (29) to their free end (37) oriented away from this corresponds approximately to the main span of the shielding part (17) measured in this direction.

2. The shielding device according to claim 1, **characterized in that** the clamping device has at least one nut (39) situated on the outside of one clamping leg (33) and screw holes (43) flush therewith in the clamping legs (31, 33) for a clamping screw (41).

3. The shielding device according to claim 2, **characterized in that** a nut (39) and associated screw holes (43) are situated at approximately half the length of the clamping legs (31, 33).

4. The shielding device according to claim 2, **characterized in that** a nut (39) and associated screw holes (43) are situated in the vicinity of the free ends of the clamping legs (31, 33).

5. The shielding device according to one of claims 1 through 4, **characterized in that** the shielding surface has a main surface component (19) and a secondary surface component (21) that is bent or curved relative thereto and the extension forming the clamping legs (31, 33) adjoins the secondary surface component (21).

6. The shielding device according to claim 5, **characterized in that** the main surface component (19) has an outline that is rectangular on the whole and the secondary surface component (21) adjoins a long side of the main surface component (19).

7. The shielding device according to claim 6, **characterized in that** the side edges (23) of the secondary surface component (21) extend approximately parallel to each other and perpendicular to the longitudinal direction of the clamping legs (31, 33).

8. The shielding device according to claim 7, **characterized in that** the width of the secondary surface component (21) measured in the direction of the length of the clamping legs (31, 33) is less than the length of the clamping legs (31, 33), which extend beyond the side edges (23) of the secondary surface component (21) on both sides.

9. The shielding device according to one of claims 1 through 8, **characterized in that** at least one reinforcing bead (45) is provided, which extends continuously across the shielding part (17) and the clamping part (1).

10. The shielding device according to claim 9, **characterized in that** two reinforcing beads (45) are provided, which are spaced apart from each other and are arranged symmetrically relative to the shielding surface of the shielding part (17) and extend to the far end of the clamping part (1), perpendicular to the longitudinal direction of the clamping legs (31, 33) and parallel to each other.

11. The shielding device according to one of claims 6 through 10, **characterized in that** the width of the clamping legs (31, 33) measured perpendicular to their length is at least half as great as the length of the shorter sides (25) of the main surface component (19) of the shielding surface (17).

## Revendications

1. Dispositif de blindage comportant un élément de blindage (17) formant une surface de blindage, en particulier un bouclier thermique, et un élément de pincement (1) qui est formé d'un seul tenant avec l'élément de blindage (17) par un prolongement de ce dernier, qui est rabattu sur lui-même à un emplacement de pliage (29) et qui est plié de manière à former deux branches de pincement (31, 33) voisines situées l'une à côté de l'autre, dont les surfaces de pincement tournées l'une vers l'autre délimitent entre elles un intervalle de pincement (35) présentant une extrémité fermée à l'emplacement de pliage (29), les branches de pincement (31, 33) étant associées à un dispositif de serrage (39, 41, 43) au moyen duquel les surfaces de pincement sont aptes à être pressées contre un élément de fixation (3) situé dans l'intervalle de pincement (35), **caractérisé en ce que**
la longueur des branches de pincement (31, 33), mesurée de l'emplacement de pliage (29) jusqu'à son extrémité libre (37) distante de celui-ci, correspond approximativement à l'extension principale de l'élément de blindage (17), mesurée dans cette direction.

2. Dispositif de blindage selon la revendication 1, **caractérisé en ce que** le dispositif de serrage comprend au moins un écrou (39) situé sur la face extérieure d'une branche de pincement (33) et des trous de vis (43) alignés avec celui-ci pour une vis de serrage (41) dans les branches de pincement (31, 33).

3. Dispositif de blindage selon la revendication 2, **caractérisé en ce qu'**un écrou (39) et des trous de vis (43) associés se situent approximativement à mi-longueur des branches de pincement (31, 33).

4. Dispositif de blindage selon la revendication 2, **caractérisé en ce qu'**un écrou (39) et des trous de vis (43) associés se situent à proximité des extrémités libres des branches de pincement (31, 33).

5. Dispositif de blindage selon l'une des revendications 1 à 4, **caractérisé en ce que** la surface de blindage comprend une partie de surface principale (19) et une partie de surface auxiliaire (21) qui est coudée ou bombée par rapport à celle-ci, et **en ce que** le prolongement formant les branches de pincement (31, 33) se raccorde à la partie de surface auxiliaire (21).

6. Dispositif de blindage selon la revendication 5, **caractérisé en ce que** la partie de surface principale (19) possède un contour général rectangulaire et **en ce que** la partie de surface auxiliaire (21) se raccorde à un grand côté de la partie de surface principale (19).

7. Dispositif de blindage selon la revendication 6, **caractérisé en ce que** les bords latéraux (23) de la partie de surface auxiliaire (21) s'étendent approximativement parallèlement l'un à l'autre et perpendiculairement à la direction longitudinale des branches de pincement (31, 33).

8. Dispositif de blindage selon la revendication 7, **caractérisé en ce que** la largeur de la partie de surface auxiliaire (21), mesurée en direction de la longueur des branches de pincement (31, 33), est inférieure à la longueur des branches de pincement (31, 33) qui s'étendent de part et d'autre au-delà des bords latéraux (23) de la partie de surface auxiliaire (21).

9. Dispositif de blindage selon l'une des revendications 1 à 8, **caractérisé en ce qu'**il est prévu au moins une moulure de renforcement (45) qui s'étend en continu sur l'élément de blindage (17) et sur l'élément de pincement (1).

10. Dispositif de blindage selon la revendication 9, **caractérisé en ce qu'**il est prévu deux moulure de renforcement (45) situées à distance l'une de l'autre et à symétrie par rapport à la surface de blindage de l'élément de blindage (17) qui s'étendent perpendiculairement à la direction longitudinale des branches de pincement (31, 33) et parallèlement l'une à l'autre, jusqu'à l'extrémité distante de l'élément de pincement (1).

11. Dispositif de blindage selon l'une des revendications 6 à 10, **caractérisé en ce que** la largueur des branches de pincement (31, 33) mesurée perpendiculairement à la longueur de celles-ci est au moins de la moitié de la longueur des petits côtés (25) de la partie de surface principale (19) de la surface de blindage (17).
